# EUROPEAN PATENT SPECIFICATION

(11) **EP 4 550 621 B1**
(45) Date of publication and mention of the grant of the patent: **14.10.2026**
(21) Application number: 23207848.5
(22) Date of filing: 06.11.2023
(51) Int. Cl.: H02J 7/02, H02J 7/34, H02M 1/00, H02M 5/12

(54) **BATTERY-POWERED ELECTRIC MINING EQUIPMENT**
BATTERIEBETRIEBENE ELEKTRISCHE BERGBAUAUSRÜSTUNG
ÉQUIPEMENT D'EXPLOITATION MINIÈRE ÉLECTRIQUE ALIMENTÉ PAR BATTERIE

(43) Date of publication of application: 07.05.2025
(73) Proprietor: Sandvik Mining and Construction Oy, 33330 Tampere (FI)
(72) Inventor: KOUHIA, Samuli, 33311 Tampere (FI); TIIHONEN, Tommi, 33311 Tampere (FI)
(74) Representative: Sandvik

(56) References cited:
- US-A1- 2014 262 664
- US-A1- 2019 273 459
- US-A1- 2023 246 446

## Description

### TECHNICAL FIELD

This disclosure relates to a battery-powered electric equipment, such as a battery-powered electric mining equipment used in a mining environment.

### BACKGROUND

Electrical grids around the world supply electricity at different voltage levels. For example, the three-phase voltage in mining environments typically varies within a range of 380 to 1000Vac and between 50Hz and 60 Hz.

To fit different grid voltages, an electric equipment, such as a mining equipment, may be equipped with a (sometimes called) multi-voltage supply transformer, which can be an autotransformer. A battery-powered electric equipment further requires a charging transformer.

The multi-voltage transformer and the charging transformer take up a lot of space, making the electric equipment heavy and bulky.

Document US2014/262664A1 discloses to power an electric motor from the grid using an autotransformer (inductive voltage divider).Document US2023/246446A1 discloses to power a battery storage using a transformer having a primary and a secondary side and using taps to adjust the voltage.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure provide a compact and/or lightweight battery-powered electric equipment. The battery-powered electric equipment can be a battery-powered mining equipment used in a mining environment, such as a drill rig.

According to a first aspect, an electric equipment comprises a first circuitry, a second circuitry, and a transformer. The first circuitry comprises a motor. The second circuitry comprises a rechargeable battery. The transformer comprises a primary side comprising a plurality of sets of primary tapping points, and a secondary side electrically isolated from the primary side. The primary side is configured to be connected to an electrical network. The first circuitry is configured to be connected to the primary side. The first circuitry is switchable between at least two of the sets of primary tapping points. The second circuitry is configured to be connected to the secondary side.

The primary side acts both as an autotransformer configured to convert the grid voltage into the first circuitry voltage, and as the primary side of a two-side transformer configured to convert the grid voltage into the second circuitry voltage.

Further, the primary side acts as a multi-voltage autotransformer configured to convert different grid voltages into a first circuitry voltage at the rated voltage of the first circuitry.

Further, the primary side and the secondary side form together a multi-voltage transformer configured to convert different grid voltages into a second circuitry voltage at the rated voltage of the second circuitry.

The transformer has thus both a multi-voltage autotransformer and a multi-voltage charging transformer functionalities. The transformer can thus replace both a multi-voltage transformer and a charging transformer. This allows the equipment to be more compact and lightweight.

In an example embodiment of electric equipment, alternatively or in addition to the above-mentioned example embodiment, the primary side is a three-phase primary side comprising: three primary windings, each set of primary tapping points comprising one tapping point on each primary winding.

In an example embodiment of electric equipment, alternatively or in addition to the above-mentioned example embodiments, the first circuitry is further switchable to be directly connected to the electrical network.

In an example embodiment of electric equipment, alternatively or in addition to the above-mentioned example embodiments, the first circuitry is configured to be switched to one of the sets of primary tapping points providing a first circuitry voltage at a rated voltage of the first circuitry.

In an example embodiment of electric equipment, alternatively or in addition to the above-mentioned example embodiments, the first circuitry is configured to be switched between the at least two of the sets of primary tapping points based on a level of a grid voltage provided by the electrical network.

In an example embodiment of electric equipment, alternatively or in addition to the above-mentioned example embodiments, a connection between the primary side and the electrical network is switchable between at least two of the sets of primary tapping points.

In an example embodiment of electric equipment, alternatively or in addition to the above-mentioned example embodiments, the connection between the primary side and the electrical network is configured to be switched between the at least two of the sets of primary tapping points based on a level of a grid voltage provided by the electrical network.

In an example embodiment of electric equipment, alternatively or in addition to the above-mentioned example embodiments, the secondary side comprises at least one set of secondary tapping points.

In an example embodiment of electric equipment, alternatively or in addition to the above-mentioned example embodiments, the secondary side comprises a plurality of sets of secondary tapping points; and wherein the second circuitry is switchable between at least two of the sets of secondary tapping points.

In an example embodiment of electric equipment, alternatively or in addition to the above-mentioned example embodiments, the secondary side is a three-phase secondary side comprising three secondary windings, each set of secondary tapping points comprising one tapping point on each secondary winding.

In an example embodiment of electric equipment, alternatively or in addition to the above-mentioned example embodiments, the second circuitry is configured to be switched to one of the sets of secondary tapping points providing a second circuitry voltage at a rated voltage of the second circuitry.

In an example embodiment of electric equipment, alternatively or in addition to the above-mentioned example embodiments, the second circuitry is configured to be switched between the at least two of the sets of secondary tapping points based on a level of a grid voltage provided by the electrical network.

In an example embodiment of electric equipment, alternatively or in addition to the above-mentioned example embodiments, the motor comprises at least one drilling powerpack motor.

In an example embodiment of electric equipment, alternatively or in addition to the above-mentioned example embodiments, the second circuitry comprises at least one tramming motor.

In an example embodiment of electric equipment, alternatively or in addition to the above-mentioned example embodiments, the second circuitry comprises a three-phase capacitor filter with inverter side chokes.

In an example embodiment of electric equipment, alternatively or in addition to the above-mentioned example embodiments, the second circuitry comprises an AC/DC rectifier (or inverter), wherein the rechargeable battery is configured to be connected to the secondary side via the AC/DC rectifier (or inverter).

In an example embodiment of electric equipment, alternatively or in addition to the above-mentioned example embodiments, the second circuitry comprises one or more secondary motor configured to operate one or more of: a compressor; a water booster pump; or an auxiliary power unit.

In an example embodiment of electric equipment, alternatively or in addition to the above-mentioned example embodiments, the primary side is arranged in a delta-connection or in a wye-connection, and the secondary side is arranged in a delta-connection or in a wye-connection.

### BRIEF DESCRIPTION OF THE DRAWINGS

The accompanying drawings, which are included to provide a further understanding of the electric mining equipment and constitute a part of this specification, illustrate examples and together with the description help to explain the principles of the electric mining equipment. In the drawings:
**FIG. 1** is a block diagram of a conventional electric equipment.
**FIG. 2** is a block diagram of an electric equipment according to an example embodiment.
**FIG. 3A** is a circuit diagram of a transformer according to an example embodiment.
**FIG. 3B and 3C** are circuit diagrams of a primary winding and a secondary winding of a transformer according to an example embodiment.
**FIG. 4** is a block diagram of a drill rig according to an example embodiment.
**FIG. 5** is a circuit diagram of a transformer in a wye-wye configuration according to an example embodiment.
**FIG. 6** is a circuit diagram of a transformer in a wye-delta configuration according to an example embodiment.
**FIG. 7** is a circuit diagram of a transformer in a delta-wye configuration according to an example embodiment.
**FIG. 8** is a circuit diagram of a transformer in a delta-delta configuration according to an example embodiment.
**FIG. 9** is a circuit diagram of a transformer according to an example embodiment.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized.

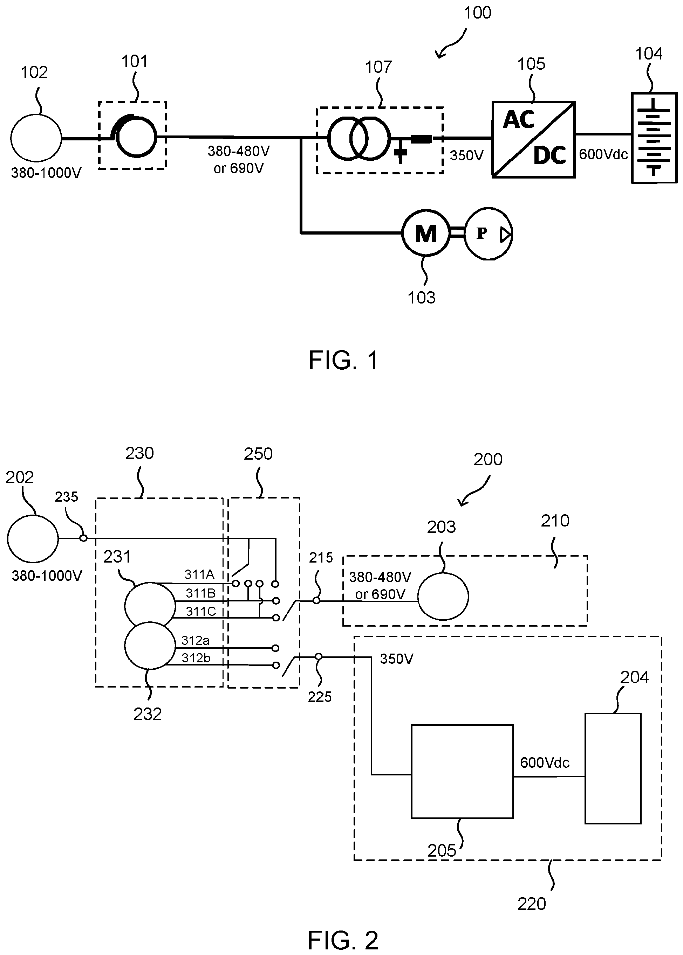

FIG. 1 illustrates a conventional battery-powered electric equipment 100. The conventional battery-powered equipment 100 comprises a motor 103, a rechargeable battery 104 and a charging circuit 105 for charging the rechargeable battery 104. The charging circuit 105 typically comprises a power converter or inverter. The conventional battery-powered electric equipment 100 may be a battery-powered mining equipment, such as a mining drill rig used in a mining environment.

To operate at different grid voltages, the conventional electric equipment 100 comprises a multi-voltage autotransformer 101 (e.g., dimensioned for 230kVA). The multi-voltage transformer 101 is configured to convert the grid voltage provided by an electrical network 102, for example, an electric grid of a mining site, into an operating voltage at the rated voltage of the motor 103 (e.g., 380-480V or 690V).

The charging circuit 105 typically operates at a lower voltage than the motor 103. The conventional electric equipment 100 thus further comprises a charging transformer 107 (e.g., dimensioned for 100kVA) configured to convert the output voltage of the multi-voltage transformer 101 into a charging voltage used to charge the rechargeable battery 104. The charging circuit 105 typically operates in direct current (DC), while the grid voltage provided by the electrical network 102 is typically alternating current (AC). The charging transformer 107 provides galvanic isolation between the DC-circuit and the AC-side. The charging transformer 107 may further comprise a filter.

The conventional electric equipment 100 thus requires two transformers 101 and 107. These two transformers 101 and 107 take up space, making the conventional equipment 100 bulky and heavy. This is particularly problematic when the equipment is a mining equipment such as a mining drill rig.

FIG. 2 illustrates an electric equipment 200 according to an example embodiment.

The electric equipment 200 comprises a first circuitry 210, a second circuitry 220, and transformer 230. A "circuitry" may be defined as a system of electrical circuits. The first circuitry 210 and the second circuitry 220 may each be defined as a sub-system of the electric equipment 200.

The first circuitry 210 comprises at least one electric motor 203. The electric motor 203 can be powered by the electrical network 202, for example, an electrical network of a mining site, when the electric equipment 200 is connected to the electrical network 202. The electric motor 203 can be powered by the rechargeable battery 204, in particular when the electric equipment 200 is not connected to the electrical network 202.

The first circuitry 210 must generally be operated at a rated voltage for reliable operation. The rated voltage refers to a voltage range at which a device or machine is designed to operate reliably. The rated voltage of the first circuitry 210 may be defined by the rated voltage of the electric motor 203 (e.g., 380-480V or 690V).

The second circuitry 220 comprises at least one rechargeable battery 204, also called storage battery. The rechargeable battery 204 is an electrical battery which can be charged, discharged into a load, and recharged many times. The second circuitry 220 comprises a battery charger 205 configured to charge the rechargeable battery 204. The battery charger 205 may comprise a rectifier configured to convert alternating current (AC) (e.g., 350V AC) to direct current (DC) (e.g., 600V DC). The second circuitry 220 may further comprise one or more electric motors or other electric equipment.

The second circuitry 220 must generally be operated at a rated voltage for reliable operation. The rated voltage of the second circuitry 210 may be defined by the rated AC voltage of the battery charger 205 (e.g., 350V AC) and/or the rated DC charging voltage of the rechargeable battery 204 (e.g., 600V DC). Typically, the charging voltage must be higher than that of the battery to force current to flow into it, but not too much higher or the battery may be damaged.

The transformer 230 has both multi-voltage transformer and charging transformer functionalities. The transformer 230 thus replaces both the multi-voltage transformer 101 and charging transformer 107 of the conventional equipment 100. This may allow the equipment 200 to be more compact and lightweight.

The transformer 230 comprises a primary side 231 and a secondary side 232. The primary side 231 and secondary side 232 are electrically isolated from each other but may be magnetically coupled through a common core. The common core may be a closed magnetic iron circuit. The core may be a soft iron core made up of individual laminations connected together.

The primary side 231 can be connected to the electrical network 202 (e.g., via an electrical network connection point 235) to receive the grid voltage provided by the electrical network 202.

The primary side 231 is connected to the first circuitry 210 (e.g., via a first circuitry connection point 215) and configured to provide a first circuitry voltage to the first circuitry 210.

The secondary side 232 is connected to the second circuitry 220 (e.g., via a second circuitry connection point 225) and configured to provide a second circuitry voltage to the second circuitry 220.

The primary side 231 acts both as an autotransformer configured to convert the grid voltage into the first circuitry voltage, and as the primary side of a two-side transformer configured to convert the grid voltage into the second circuitry voltage.

The charging circuit 220 typically operates in DC, while the grid voltage provided by the electrical network 202 is typically AC. The secondary side 232 provides galvanic isolation between the DC-circuit of the second circuitry 220 and the AC-side.

Further, the primary side 231 acts as a multi-voltage autotransformer configured to convert different grid voltages into a first circuitry voltage at the rated voltage of the first circuitry.

Further, the primary side 231 and the secondary side 232 form together a multi-voltage transformer configured to convert different grid voltages into a second circuitry voltage at the rated voltage of the second circuitry.

The primary side 231 may be dimensioned for the first circuitry (e.g., 230kVA), while the secondary side 232 may be dimensioned for the second circuitry (e.g., 100kVA). Simultaneous load sharing may be done according to different prioritization strategies, for example based on the temperatures of the primary and secondary windings.

The primary side 231 comprises at least two set 311A, 311B, 311C of primary tapping points. Each set 311A, 311B, 311C of primary tapping points provides a different voltage.

Three sets 311A, 311B, 311C of primary tapping points are illustrated on FIG. 2, but it is understood that the primary side 231 may comprise any number of sets of primary tapping points, for example up to 100 sets of primary tapping points.

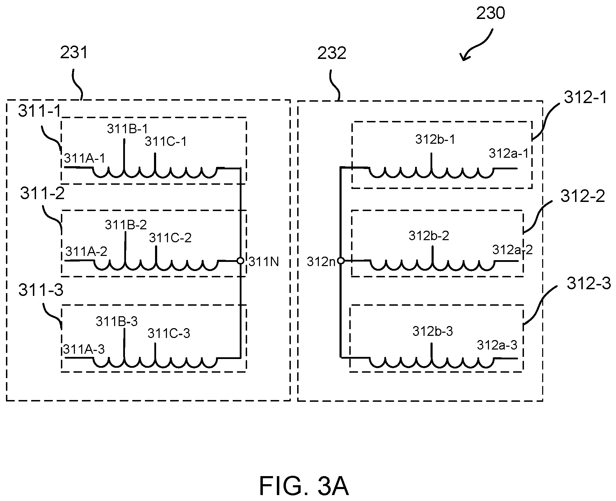

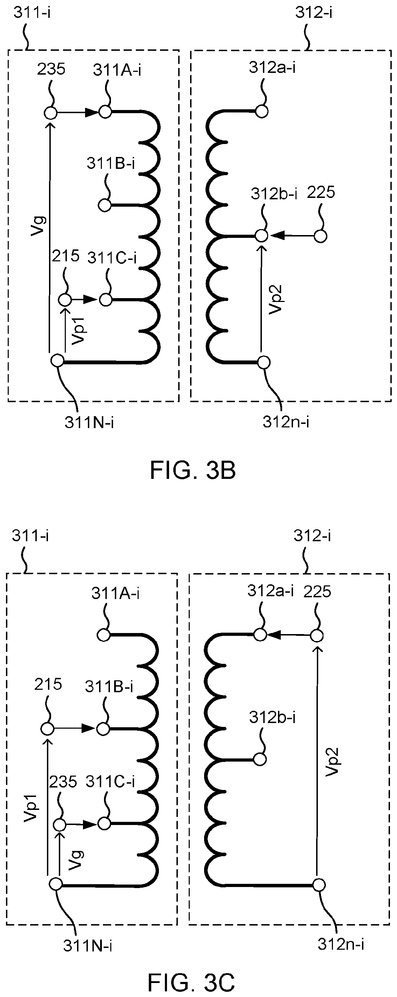

As described in more detail in relation to FIG. 3A, 3B, and 3C, each set 311A, 311B, 311C of primary tapping points comprises one tapping point on each of the primary winding 311-i. For example, in the three-phase transformer of the example embodiment of FIG. 3A, 3B, and 3C, the set of primary tapping points 311B comprises tapping point 311B-1 on the first primary winding 311-1, tapping point 311B-2 on the second primary winding 311-2, and tapping point 311B-3 on the third primary winding 311-3.

The first circuitry 210 can be connected to the primary side 231 via (alternately) any one of (at least some of) the sets 311A, 311B, 311C of primary tapping points. The connection point 215 can be switched between (at least some of) the various sets 311A, 311B, 311C of primary tapping points.

Each set 311A, 311B, 311C of primary tapping points provides a different ratio of the grid voltage to the first circuitry 210. The first circuitry 210 can be connected to one of the sets 311A, 311B, or 311C that provides a first circuitry voltage that is at the rated voltage of the first circuitry (e.g., rated voltage of the motor 203). Depending on the grid voltage provided by the electrical network 202, a different one of the sets 311A, 311B, or 311C can be selected to be connected to the first circuitry 210. The primary side 231 thus acts as a multi-voltage autotransformer configured to convert different grid voltages into a first circuitry voltage at the rated voltage of the first circuitry.

If the grid voltage available from the electrical network 202 is at the rated voltage of the first circuitry 210, the first circuitry 210 may be driven directly by the electrical network 202. To that end, the first circuitry 210 is connected to the electrical network 202 directly (as opposed to via the transformer 230).

In at least some embodiments, the primary side 231 can be connected to the electrical network 202 via (alternately) any one of (at least some of) the various sets 311A, 311B, 311C of primary tapping points. The connection point 235 between the primary side 231 and the electrical network 202 can be switched between (at least some of) the various sets of primary tapping points 311A, 311B, 311C.

The first circuitry voltage depends on which set of primary tapping points is connected to the electrical network 202 and/or which set of primary tapping points is connected to the first circuitry 210. The set of primary tapping points to be connected to the electrical network 202 and/or the set of primary tapping points to be connected to the first circuitry 210 may be selected such that the first circuitry voltage is at the rated voltage of the first circuitry.

The secondary side 232 may comprise at least one set 312a, 312b of secondary tapping points.

Two sets 312a, 312b of secondary tapping points are illustrated on FIG. 2. It is however understood that the secondary side 232 may comprise any number of sets of secondary tapping points, for example up to 100 sets.

The second circuitry 220 can be connected to the secondary side 232 via (alternately) any one of (at least some of) the sets 312a, 312b of secondary tapping points. The connection point 225 between the secondary side 232 and the second circuitry 220 can be switched between (at least some of) the various sets 312a, 312b of secondary tapping points.

Each set 312a, 312b of secondary tapping points provides a different ratio of the grid voltage. The second circuitry 220 can be connected to one of the sets 312a, 312b providing a voltage at the rated voltage of the second circuitry (e.g., rated voltage of the battery). Depending on the grid voltage provided by the electrical network 202, a different one of the sets 312a, 312b can be selected to be connected to the second circuitry 220. The primary side 231 and the secondary side 232 thus form together a multi-voltage transformer configured to convert different grid voltages into a second circuitry voltage at the rated voltage of the second circuitry 220.

The second circuitry voltage depends on the set of primary tapping points connected to the electrical network 202 and/or the set of secondary tapping points connected to the second circuitry 220. The set of primary tapping points to be connected to the electrical network 202 and/or the set of secondary tapping points to be connected to the second circuitry 220 can be selected such that the second circuitry voltage is at the rated voltage of the second circuitry (e.g., rated voltage of the charging circuit 220).

The transformer 230 may comprise a tap changer 250. The tap changer 250 is configured to switch the first circuitry 210 (e.g., connection point 215) between (at least some of) the various sets of primary tapping points 311A, 311B, 311C, and optionally connection point 235. The tap changer 250 may be configured to select one of the sets of primary tapping points 311A, 311B, 311C, (or connection point 235) based on a grid voltage provided by the electrical network 202. More specifically, the tap changer 250 may be configured to select a set of primary tapping points 311A, 311B, 311C, (or connection point 235) that provides a ratio of the grid voltage that is at the rated voltage of the first circuitry 210.

The tap changer 250 may be further configured to switch the electrical network 202 (e.g., connection point 235) between (at least some of) the various sets of primary tapping points 311A, 311B, 311C. The tap changer 250 may be configured to select one of the sets of primary tapping points 311A, 311B, 311C, or connection point 235 based on a grid voltage provided by the electrical network 202. More specifically, the tap changer 250 may be configured to select a set of primary tapping points 311A, 311B, 311C, (or connection point 235) such that the first circuitry voltage is at the rated voltage of the first circuitry and/or such that the second circuitry voltage is at the rated voltage of the second circuitry.

The tap changer 250 may be further configured to switch the second circuitry 220 (e.g., connection point 225) between (at least some of) the various sets of secondary tapping points 312a, 312b. The tap changer 250 may be configured to select one of the sets of secondary tapping points 312a, 312b based on a grid voltage provided by the electrical network 202. More specifically, the tap changer 250 may be configured to select a set of secondary tapping points 312a, 312b that provides a ratio of the grid voltage that is at the rated voltage of the second circuitry 220.

The process of selecting and/or switching between sets of tapping points may be a manual operation, electronically assisted, or fully electronic. A control unit may measure the grid voltage and automatically selects a primary tapping point for the first circuitry and/or a secondary tapping point for the second circuitry.

FIG. 3A illustrates an example embodiment of the transformer 230 as a three-phase transformer.

The transformer 230 may be a three-phase transformer. A three-phase grid voltage is provided by the electrical network 202. Three-phase power systems are common where high power is required, such as large induction motors, other types of electric motors and demanding loads, such as some mining equipment such as a drill rig.

The primary side 231 comprises three primary windings 311-1, 311-2, 311-3 (collectively referred as primary windings 311-i, where i can be 1, 2, and 3). The secondary side 232 comprises three secondary windings 312-1, 312-2, 312-3 (collectively referred as secondary windings 312-i, where i can be 1, 2, and 3).

The three primary windings 311-1, 311-2, 311-3 and three secondary windings 312-1, 312-2, 312-3 form three pairs of primary and secondary windings. The three pairs of primary and secondary windings may be mounted onto one single common core.

Each pair of primary 311-i and secondary 312-i windings are electrically isolated from each other but magnetically coupled through the common core allowing electrical power to be transferred from the primary winding 311-i to the secondary winding 312-i. When an electric current passed through the primary winding 311-i, a magnetic field is generated which induces a voltage into the secondary winding 312-i.

The primary 311-i and secondary 312-i windings can be connected in different configuration, e.g., star (wye), delta (mesh) or interconnected-star (zig-zag). The combinations of the three windings may be with the primary winding delta-connected and the secondary windings star-connected, or star-delta, star-star or delta-delta, depending on the transformers use.

In particular, the primary 311 can be in a YanO configuration, and the secondary 312 in a Yyn0 configuration. YanO refers to autotransformer connection and Yyn0 refers to isolation transformer connection (e.g., the charging transformer).

FIG. 3B and 3C illustrate an example embodiment of one primary winding 311-i and one secondary winding 312-i. i can be 1, 2, and 3.

Each primary 311-i and secondary 312-i winding comprises a wire made of electrical conductor (e.g., copper) wrapped around a section of the common core.

Each primary winding 311-i comprises at least two primary tapping points. A tapping point is an electrical connection point where an external circuit can be connected to the winding.

Each primary winding 311-i comprises a terminal point 311N-i and 311A-i at each end of the primary winding 311-i, and one or more intermediate tapping points 311B-i, 311C-i along the length of the primary winding 311-i. Terminal point 311A-i may be a terminal tapping point.

Different tapping points 311A-i, 311B-i, 311C-i along the primary winding 311-i correspond to different voltages, measured from the common terminal point 311N-i.

In the example embodiment illustrated by FIGs 3A, 3B, and 3C, each primary winding 311-i comprises a primary terminal tapping point 311A-i, a first intermediate primary tapping point 311B-i, and a second intermediate tapping point 311C-i. It is however understood that each primary winding 311-i may comprise any number of tapping points, for example up to 100 tapping points.

Both the electrical network 202 and the first circuitry 210 may be connected in common to terminal point 311N-i. The other terminal of the electrical network 202 is connected to one of the tapping points (e.g., 311A-i, 311B-i, or 311C-i). The other terminal of the first circuitry 210 is connected to another one of the tapping points (e.g., 311A-i, 311B-i, or 311C-i).

Each secondary winding 312-i may comprise at least one secondary tapping point. Each secondary winding 312-i comprises a terminal point 312a-i and 311n-i at each end of the secondary winding 312-i. Each secondary winding 312-i may further comprise one or more intermediate tapping points 312b-i along the length of the secondary winding 312-i. Terminal point 312a-i may be a terminal tapping point.

Different tapping points 312a-i, 312b-i along the secondary winding 312-i correspond to different voltages, measured from terminal point 312n-i.

In the example embodiment illustrated by FIGs 3A, 3B, and 3C, each secondary winding 312-i comprises a secondary terminal point 312a-i, and a secondary intermediate tapping point 312b-i. It is however understood that each secondary winding 312-i may comprise any number of secondary tapping points, for example up to 100 secondary tapping points.

The second circuitry 220 can be connected across terminal point 312n-i and one of the secondary tapping points 312a-i, 312b-i.

As illustrated by FIG. 3B, the primary side 311 may function as a step-down autotransformer configured to step-down the grid voltage Vg to provide a lower first circuitry voltage Vp1 to the first circuitry.

To that end, the electrical network 202 may be connected across a larger portion of the primary winding 311-i (e.g., connection point 235 connected to tapping point 311A-I, or 311B-i), while the first circuitry 210 is connected across a smaller portion of the primary winding 311-i (e.g., connection point 215 connected to tapping point 311C-i). The larger portion of the primary winding 311-i can be the entire primary winding 311-i (e.g., connection point 235 connected to terminal tapping point 311A-i).

As illustrated by FIG. 3C, the primary side 311 may function as a step-up autotransformer configured to step-up the grid voltage Vg to provide a higher first circuitry voltage Vp1 to the first circuitry.

To that end, the first circuitry 210 may be connected across a larger portion of the primary winding 311-i (e.g., connection point 215 connected to a tapping point 311A-i, or 311B-i), while the electrical network 202 is connected across a smaller portion of the primary winding 311-i (e.g., connection point 235 connected to tapping point 311C-i).

The ratio of first circuitry voltage Vp1 to grid voltage Vg is equal to the ratio of the length (or number of turns of winding) of the portion of the primary winding across which the first circuitry 210 is connected to the length of the portion of the primary winding across which the electrical network 202 is connected.

As illustrated by FIG. 3B, the primary side 311 and secondary side 312 may function together as a step-down transformer configured to step-down the grid voltage Vg to provide a lower second circuitry voltage Vp2 to the second circuitry.

To that end, the second circuitry 220 may be connected across a smaller portion of the secondary winding 312-i (e.g., connection point 225 connected to tapping point 312b-i), while the electrical network 202 is connected across a larger portion of the primary winding 311-i (e.g., connection point 235 connected to tapping point 311A-i or 311B-i).

As illustrated by FIG. 3C, the primary side 311 and secondary side 312 may function together as a step-up transformer configured to step-up the grid voltage Vg to provide a higher second circuitry voltage Vp2 to the second circuitry.

To that end, the second circuitry 220 may be connected across a larger portion of the secondary winding 312-i (e.g., connection point 225 connected to tapping point 312a-i), while the electrical network 202 is connected across a smaller portion of the primary winding 311-i (e.g., connection point 235 connected to tapping point 311C-i or 311B-i). The larger portion of the secondary winding 312-i can be the entire secondary winding 312-i (e.g., connection point 225 connected to terminal point 312a-i).

The ratio of second circuitry voltage Vp2 to grid voltage Vg is equal to the ratio of the length (or number of turns of winding) of the portion of the secondary winding across which the second circuitry 220 is connected to the length of the portion of the primary winding across which the electrical network 202 is connected.

The transformer 230 may be liquid-cooled. The transformer 230 may be placed in an enclosure filled with liquid (e.g., transformer oil) that both cools and insulates the windings. Liquid cooling may also be arranged in a way where cooling media and the cooled part of the transformer (e.g., the coils) are not in direct contact. Liquid cooling is convenient since there are already other liquid cooled components in the system.

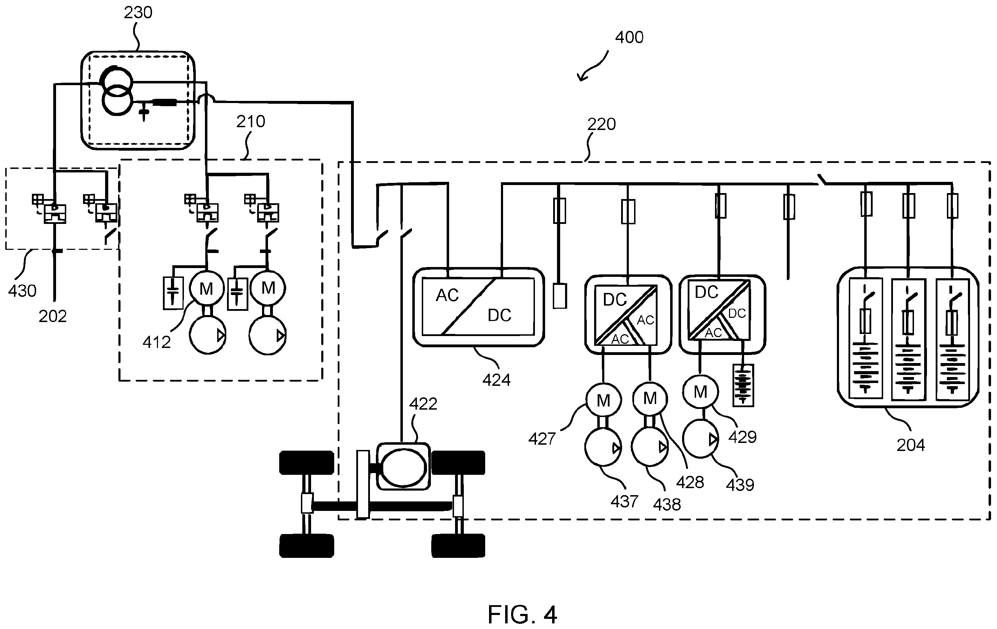

FIG. 4 illustrates an example embodiment of the electric equipment 200 as a mining equipment 400 such as an underground drill rig 400. An underground drilling rig is a system or machine that drills holes under the ground, e.g., for hole drilling in underground mining and tunneling. Drilling rigs can be mobile equipment mounted on a vehicle (such as a truck), on tracks or on trailers.

The transformer 230 may be connected to the electrical network 202 via one or more inputs controlled by switches at 430, which may further comprise additional electrical components such as fuses, etc.

The first circuitry 210 may comprise one or more powerpack motors 412, e.g., configured to operate one or more electric-powered hydraulic powerpacks. An electric-powered hydraulic powerpack is a system or machine that converts electricity to hydraulic energy. An electric-powered hydraulic powerpack typically produce a hydraulic fluid flow, which can be maintained at a pressure.

Furthermore, the second circuitry 220 may comprise at least one tramming motor 422, e.g., configured to supply the power for moving or tramming the machine.

In addition, the second circuitry 220 may comprise a rectifier or AC/DC converter 424. The rechargeable battery 204 is connected to the secondary side 232 via the AC/DC converter 424.

In addition, the second circuitry 220 may comprise one or more secondary electric motors, such as electric motor 427 configured to operate a compressor 437, electric motor 428 configured to operate a water booster pump 438 and/or electric motor 429 configured to operate an auxiliary power unit 439. If connected behind the rectifier 424, the secondary electric motors 427, 428, 429 may be connected to the rectifier 424 via an inverter or DC/AC converter 424.

In addition, the second circuitry 220 may comprise one or more additional components connected to the DC link of the rectifier 424, such as e.g., a heater, an on-board slow charger, an air-conditioning compressor.

Electric equipment in the first circuitry (e.g., powerpack motors 412) and/or electric equipment in the second circuitry (e.g., electric motor 427, 428, 429) can be powered by the electrical network 202, for example, an electrical network of a mining site, when the mining equipment 400 is connected to the electrical network 202. Electric equipment in the first circuitry (e.g., powerpack motors 412) and/or electric equipment in the second circuitry (e.g., electric motor 427, 428, 429) can be powered by the rechargeable battery 204, e.g., when the electric equipment 200 is not connected to the electrical network 202.

The combined transformer 230 takes up less space than the multi-voltage transformer 101 and charging transformer 107 of the conventional equipment 100. This frees up some space thereby allowing the use of a larger number of powerpacks and/or larger powerpacks in a drill rig.

Further, the combined transformer 230 allows for the separation of the powerpack motors 412 from the tramming motors 422. This offers major benefits to commonality between different sized drill rigs and between different applications.

Further, one larger combined transformer (e.g., transformer 230) is cheaper and less complex than two separate transformers (e.g., multi-voltage transformer 101 and charging transformer 107) with same performance. This also means better component utilization. For example, in 690V grid voltage case, the conventional equipment 100 leaves the multi-voltage transformer 101 unused.

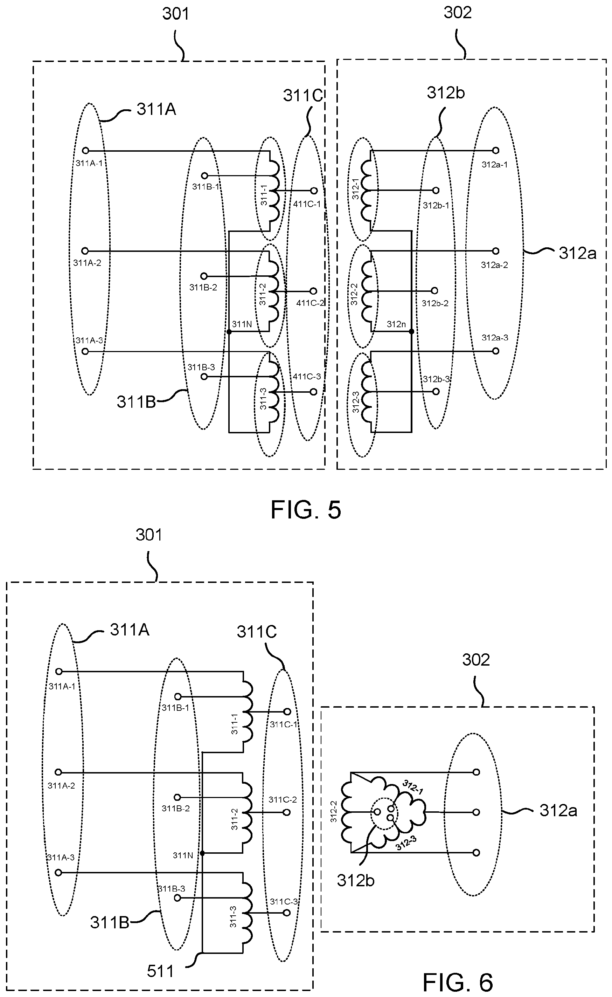

FIG. 5 illustrates an example embodiment of the transformer 230, wherein the primary side 231 is arranged in a wye-connection, and the secondary side 232 is arranged in a wye-connection. In such a configuration, the three primary windings 311-1, 311-2, 311-3 are connected at a common neutral point 311N. The three secondary windings 312-1, 312-2, 312-3 are connected at a common neutral point 312n.

FIG. 6 illustrates an example embodiment of the transformer 230, wherein the primary side 231 is configured in a wye-connection and the secondary side 232 is configured in a delta-connection.

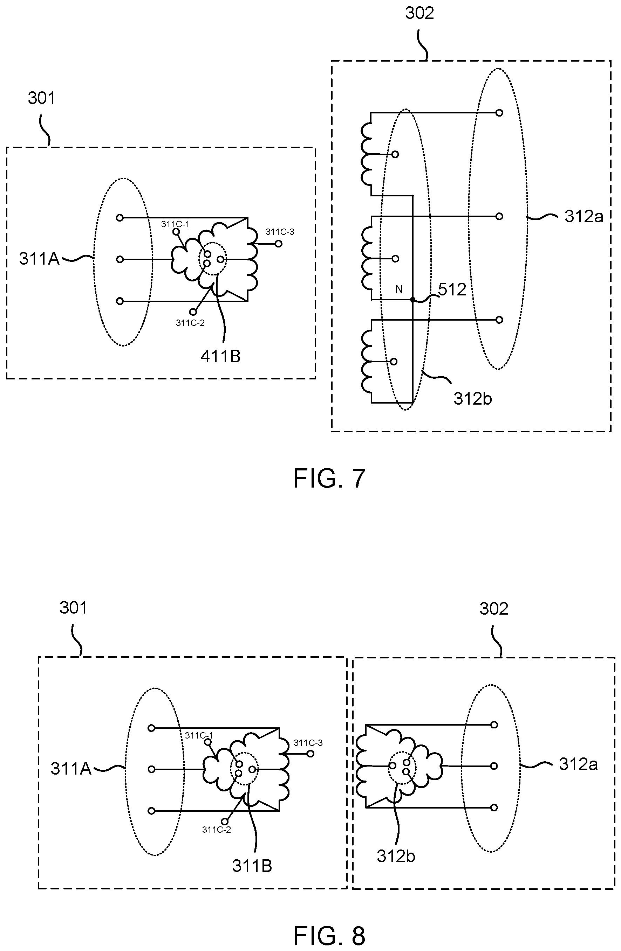

FIG. 7 illustrates an example embodiment of the transformer 230, wherein the primary side 231 is configured in a delta-connection and the secondary side 232 is configured in a wye-connection.

FIG. 8 illustrates an example embodiment of the transformer 230, wherein both the primary side 231 and the secondary side 232 are arranged in delta-connection.

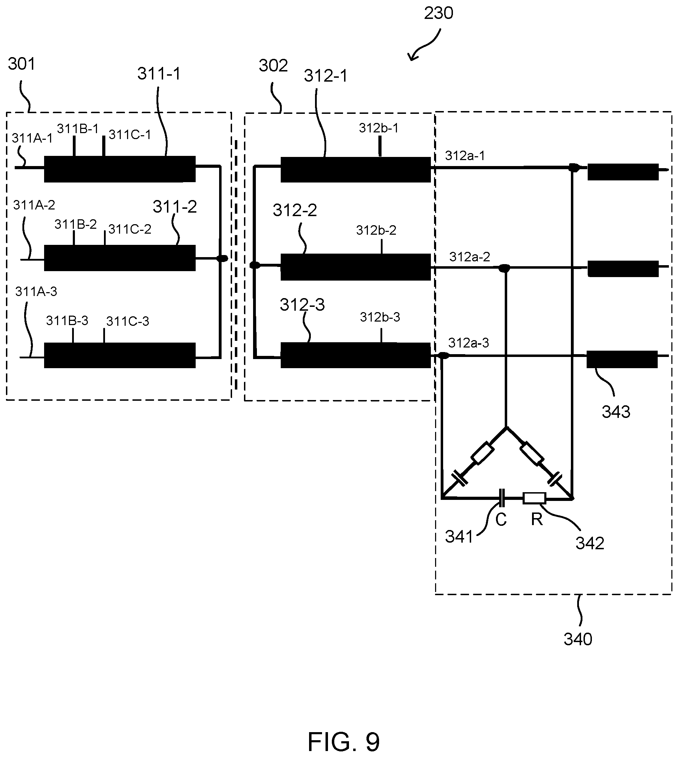

FIG. 9 illustrates an example embodiment of the transformer 230 comprising a three-phase capacitor filter circuit 340 on the secondary side 232.

The three-phase capacitor filter 340 may comprise a capacitor 341 (optionally connected in series with a damping resistor 342) between each phase, . The three-phase capacitor filter 340 may further comprise an inverter side choke 343 for each phase. The capacitor filter 340 may be configured in between the secondary terminal point 312a-i of each secondary winding 312-i and each phase of the second circuitry 220.

The following examples of voltage, current or power levels available on different terminals and/or tapping points of the multi-voltage transformer 230 are given by way of example only, depending on how the electric equipment 200 may behave in different scenarios. Any given example comprising specific voltage, current or power values are only described as means to illustrate the behavior of the disclosure and are not given to specifically limit the scope to these examples.

In an example of the transformer 230, a 1000 Volt three-phase voltage from an electrical network 202 may be provided to the primary terminal point 311A, which may yield a 700 Volt output voltage on primary tapping point 311C of the primary side 231. In addition, a 350 Volt output voltage may be available on secondary tapping point 312b on the secondary side 232.

In an example of the multi-voltage transformer 230, a 575 Volt three-phase voltage from an electrical network 202 may be provided to primary tapping point 311B, which may yield a 480 Volt output voltage on primary tapping point 311C. In addition, a 348 Volt output voltage may be available on secondary terminal point 312a.

In an example of the multi-voltage transformer 230, a 550 Volt three-phase voltage from an electrical network 202 may be provided to primary tapping point 311C, which may yield a 658 Volt output voltage on primary tapping point 311B. In addition, 332 Volt output voltage may be available on secondary terminal point 312a.

The term 'comprising' is used herein to mean including the method, blocks, or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of examples.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

Although subjects may be referred to as 'first' or 'second' subjects, this does not necessarily indicate any order or importance of the subjects. Instead, such attributes may be used solely for the purpose of making a difference between subjects.

## Claims

1. An electric equipment (200) comprising a first circuitry (210), a second circuitry (220), and a transformer (230), wherein:
the first circuitry (210) comprises a motor (203) ;
the second circuitry (220) comprises a rechargeable battery (204); and
the transformer (230) comprises:
a primary side (231) comprising a plurality of sets (311A, 311B, 311C) of primary tapping points, and
a secondary side (232) electrically isolated from the primary side (231); and
wherein:
the primary side (231) is configured to be connected to an electrical network (202),
the first circuitry (210) is configured to be connected to the primary side (231), wherein the first circuitry (210) is switchable between at least two of the sets (311A, 311B, 311C) of primary tapping points,
the second circuitry (220) is configured to be connected to the secondary side (232).

2. The electric equipment (200) of claim **1,** wherein the primary side (231) comprises three primary windings (311-1, 311-2, 311-3), each set (311A, 311B, 311C) of primary tapping points comprising one tapping point (311A-i, 311B-i, 311C-i) on each primary winding (311-i).

3. The electric equipment (200) of claim 1 or 2, wherein the first circuitry (210) is further switchable to be directly connected to the electrical network (202).

4. The electric equipment (200) of any one of claims 1 to 3, wherein the first circuitry (210) is configured to be switched to one of the sets (311A, 311B, 311C) of primary tapping points providing a first circuitry voltage at a rated voltage of the first circuitry (210).

5. The electric equipment (200) of any one of claims 1 to 4, wherein the first circuitry (210) is configured to be switched between the at least two of the sets (311A, 311B, 311C) of primary tapping points based on a level of a grid voltage provided by the electrical network (202).

6. The electric equipment (200) of any one of claims 1 to 5, wherein a connection (235) between the primary side (231) and the electrical network (202) is switchable between at least two of the sets (311A, 311B, 311C) of primary tapping points.

7. The electric equipment (200) of claim 6, wherein the connection (235) between the primary side (231) and the electrical network (202) is configured to be switched between the at least two of the sets (311A, 311B, 311C) of primary tapping points based on a level of a grid voltage provided by the electrical network (202).

8. The electric equipment (200) of any one of claims 1 to 7, wherein the secondary side (232) comprising at least one set (312a, 312b) of secondary tapping points.

9. The electric equipment (200) of claim 8, wherein the secondary side (232) comprises three secondary windings (312-1, 312-2, 312-3), each set (312a, 312b) of secondary tapping points comprising one tapping point (312a-i, 312b-i) on each secondary winding (312-i).

10. The electric equipment (200) of claim 8 or 9, wherein the secondary side (232) comprising a plurality of sets (312a, 312b) of secondary tapping points; and
wherein the second circuitry (220) is switchable between at least two of the sets (312a, 312b) of secondary tapping points.

11. The electric equipment (200) of claim 10, wherein the second circuitry (220) is configured to be switched to one of the sets (312a, 312b) of secondary tapping points providing a second circuitry voltage at a rated voltage of the second circuitry (220).

12. The electric equipment (200) of claim 10 or 11, wherein the second circuitry (220) is configured to be switched between at least two of the sets (312a, 312b) of secondary tapping points based on a level of a grid voltage provided by the electrical network (202).

13. The electric equipment (200) of any one of claims 1 to 12, wherein the motor (203) comprises at least one drilling powerpack motor (412).

14. The electric equipment (200) of any one of claims 1 to 13, wherein the second circuitry (220) comprises a three-phase capacitor filter (340) with inverter side chokes (343).

15. The electric equipment (200) of any one of claims 1 to 14, wherein the second circuitry (220) comprises one or more of:
a tramming motor (422); and
one or more secondary motors (427, 428, 429) configured to operate one or more of:
a compressor (437);
a water booster pump (438); or
an auxiliary power unit (439).

## Patentansprüche

1. Elektrische Ausrüstung (200), umfassend eine erste Schaltung (210), eine zweite Schaltung (220) und einen Transformator (230), wobei:
die erste Schaltung (210) einen Motor (203) umfasst;
die zweite Schaltung (220) eine wiederaufladbare Batterie (204) umfasst; und
der Transformator (230) umfasst:
eine Primärseite (231), die eine Vielzahl von Sätzen (311A, 311B, 311C) von Primärabgreifpunkten umfasst, und
eine Sekundärseite (232), die elektrisch von der Primärseite (231) isoliert ist; und
wobei:
die Primärseite (231) konfiguriert ist, um an ein elektrisches Netzwerk (202) angeschlossen zu werden,
die erste Schaltung (210) konfiguriert ist, um an die Primärseite (231) angeschlossen zu werden, wobei die erste Schaltung (210) zwischen mindestens zwei der Sätze (311A, 311B, 311C) von Primärabgreifpunkten umschaltbar ist,
die zweite Schaltung (220) konfiguriert ist, um an die Sekundärseite (232) angeschlossen zu werden.

2. Elektrische Ausrüstung (200) nach Anspruch 1, wobei die Primärseite (231) drei Primärwicklungen (311-1, 311-2, 311-3) umfasst, wobei jeder Satz (311A, 311B, 311C) von Primärabgreifpunkten einen Abgreifpunkt (311A-i, 311B-i, 311C-i) an jeder Primärwicklung (311-i) umfasst.

3. Elektrische Ausrüstung (200) nach Anspruch 1 oder 2, wobei die erste Schaltung (210) weiter so schaltbar ist, dass sie direkt an das elektrische Netzwerk (202) angeschlossen werden kann.

4. Elektrische Ausrüstung (200) nach einem der Ansprüche 1 bis 3, wobei die erste Schaltung (210) konfiguriert ist, um auf einen der Sätze (311A, 311B, 311C) von Primärabgreifpunkten umgeschaltet zu werden, die eine erste Schaltungsspannung bei einer Nennspannung der ersten Schaltung (210) bereitstellen.

5. Elektrische Ausrüstung (200) nach einem der Ansprüche 1 bis 4, wobei die erste Schaltung (210) konfiguriert ist, um zwischen mindestens zwei der Sätze (311A, 311B, 311C) von Primärabgreifpunkten auf der Grundlage eines Pegels einer vom elektrischen Netzwerk (202) bereitgestellten Netzspannung umgeschaltet zu werden.

6. Elektrische Ausrüstung (200) nach einem der Ansprüche 1 bis 5, wobei eine Verbindung (235) zwischen der Primärseite (231) und dem elektrischen Netzwerk (202) zwischen mindestens zwei der Sätze (311A, 311B, 311C) von Primärabgreifpunkten umschaltbar ist.

7. Elektrische Ausrüstung (200) nach Anspruch 6, wobei die Verbindung (235) zwischen der Primärseite (231) und dem elektrischen Netzwerk (202) konfiguriert ist, um zwischen mindestens zwei der Sätze (311A, 311B, 311C) von Primärabgreifpunkten auf der Grundlage eines Pegels einer vom elektrischen Netzwerk (202) bereitgestellten Netzspannung umgeschaltet zu werden.

8. Elektrische Ausrüstung (200) nach einem der Ansprüche 1 bis 7, wobei die Sekundärseite (232) mindestens einen Satz (312a, 312b) von Sekundärabgreifpunkten umfasst.

9. Elektrische Ausrüstung (200) nach Anspruch 8, wobei die Sekundärseite (232) drei Sekundärwicklungen (312-1, 312-2, 312-3) umfasst, wobei jeder Satz (312a, 312b) von Sekundärabgreifpunkten einen Abgreifpunkt (312a-i, 312b-i) an jeder Sekundärwicklung (312-i) umfasst.

10. Elektrische Ausrüstung (200) nach Anspruch 8 oder 9, wobei die Sekundärseite (232) eine Vielzahl von Sätzen (312a, 312b) von Sekundärabgreifpunkten umfasst; und
wobei die zweite Schaltung (220) zwischen mindestens zwei der Sätze (312a, 312b) von Sekundärabgreifpunkten umschaltbar ist.

11. Elektrische Ausrüstung (200) nach Anspruch 10, wobei die zweite Schaltung (220) konfiguriert ist, um auf einen der Sätze (312a, 312b) von Sekundärabgreifpunkten umgeschaltet zu werden, die eine zweite Schaltungsspannung bei einer Nennspannung der zweiten Schaltung (220) bereitstellen.

12. Elektrische Ausrüstung (200) nach Anspruch 10 oder 11, wobei die zweite Schaltung (220) konfiguriert ist, um zwischen mindestens zwei der Sätze (312a, 312b) von Sekundärabgriffspunkten auf der Grundlage eines Pegels einer vom elektrischen Netzwerk (202) bereitgestellten Netzspannung umzuschalten.

13. Elektrische Ausrüstung (200) nach einem der Ansprüche 1 bis 12, wobei der Motor (203) mindestens einen Bohraggregatmotor (412) umfasst.

14. Elektrische Ausrüstung (200) nach einem der Ansprüche 1 bis 13, wobei die zweite Schaltung (220) einen dreiphasigen Kondensatorfilter (340) mit wechselrichterseitigen Drosseln (343) umfasst.

15. Elektrische Ausrüstung (200) nach einem der Ansprüche 1 bis 14, wobei die zweite Schaltung (220) eine oder mehrere der Folgenden umfasst:
einen Verfahrmotor (422); und
einen oder mehrere Sekundärmotoren (427, 428, 429), die konfiguriert sind, um eines oder mehrere der Folgenden zu betreiben:
einen Kompressor (437);
eine Wasserdruckerhöhungspumpe (438); oder
eine Hilfsstromversorgungseinheit (439).

## Revendications

1. Équipement électrique (200) comprenant un premier circuit (210), un second circuit (220) et un transformateur (230), dans lequel :
le premier circuit (210) comprend un moteur (203) ;
le second circuit (220) comprend une pile rechargeable (204) ; et
le transformateur (230) comprend :
un côté primaire (231) comprenant une pluralité d'ensembles (311A, 311B, 311C) de points de prise primaires, et
un côté secondaire (232) électriquement isolé du côté primaire (231) ; et
dans lequel :
le côté primaire (231) est configuré pour être connecté à un réseau électrique (202),
le premier circuit (210) est configuré pour être connecté au côté primaire (231), dans lequel le premier circuit (210) peut être commuté entre au moins deux des ensembles (311A, 311B, 311C) de points de prise primaires,
le second circuit (220) est configuré pour être connecté au côté secondaire (232).

2. Équipement électrique (200) selon la revendication 1, dans lequel le côté primaire (231) comprend trois enroulements primaires (311-1, 311-2, 311-3), chaque ensemble (311A, 311B, 311C) de points de prise primaires comprenant un point d'appui (311A-i, 311B-i, 311C-i) sur chaque enroulement primaire (311-i).

3. Équipement électrique (200) selon la revendication 1 ou 2, dans lequel le premier circuit (210) peut en outre être commuté pour être directement connecté au réseau électrique (202).

4. Équipement électrique (200) selon l'une quelconque des revendications 1 à 3, dans lequel le premier circuit (210) est configuré pour être commuté sur l'un des ensembles (311A, 311B, 311C) de points de prise primaires fournissant une tension de premier circuit à une tension nominale du premier circuit (210).

5. Équipement électrique (200) selon l'une quelconque des revendications 1 à 4, dans lequel le premier circuit (210) est configuré pour être commuté entre les au moins deux des ensembles (311A, 311B, 311C) de points de prise primaires sur la base d'un niveau de tension de réseau fourni par le réseau électrique (202).

6. Équipement électrique (200) selon l'une quelconque des revendications 1 à 5, dans lequel une connexion (235) entre le côté primaire (231) et le réseau électrique (202) peut être commutée entre au moins deux des ensembles (311A, 311B, 311C) de points de prise primaires.

7. Équipement électrique (200) selon la revendication 6, dans lequel la connexion (235) entre le côté primaire (231) et le réseau électrique (202) est configurée pour être commutée entre les au moins deux des ensembles (311A, 311B, 311C) de points de prise primaires sur la base d'un niveau de tension de réseau fourni par le réseau électrique (202).

8. Équipement électrique (200) selon l'une quelconque des revendications 1 à 7, dans lequel le côté secondaire (232) comprend au moins un ensemble (312a, 312b) de points de prise secondaires.

9. Équipement électrique (200) selon la revendication 8, dans lequel le côté secondaire (232) comprend trois enroulements secondaires (312-1, 312-2, 312-3), chaque ensemble (312a, 312b) de points de prise secondaires comprenant un point d'appui (312a-i, 312b-i) sur chaque enroulement secondaire (312-i).

10. Équipement électrique (200) selon la revendication 8 ou 9, dans lequel le côté secondaire (232) comprend une pluralité d'ensembles (312a, 312b) de points de prise secondaires ; et
dans lequel le second circuit (220) peut être commuté entre au moins deux des ensembles (312a, 312b) de points de prise secondaires.

11. Équipement électrique (200) selon la revendication 10, dans lequel le second circuit (220) est configuré pour être commuté sur l'un des ensembles (312a, 312b) de points de prise secondaires fournissant une tension de second circuit à une tension nominale du second circuit (220).

12. Équipement électrique (200) selon la revendication 10 ou 11, dans lequel le second circuit (220) est configuré pour être commuté entre au moins deux des ensembles (312a, 312b) de points de prise secondaires sur la base d'un niveau de tension de réseau fourni par le réseau électrique (202).

13. Équipement électrique (200) selon l'une quelconque des revendications 1 à 12, dans lequel le moteur (203) comprend au moins un groupe moteur de forage (412).

14. Équipement électrique (200) selon l'une quelconque des revendications 1 à 13, dans lequel le second circuit (220) comprend un filtre à condensateur triphasé (340) avec des inductances côté onduleur (343).

15. Équipement électrique (200) selon l'une quelconque des revendications 1 à 14, dans lequel le second circuit (220) comprend un ou plusieurs parmi :
un moteur de tramage (422) ; et
un ou plusieurs moteurs secondaires (427, 428, 429) configurés pour actionner un ou plusieurs parmi :
un compresseur (437) ;
une pompe de surpression d'eau (438) ; ou
une unité de puissance auxiliaire (439).
